# EUROPÄISCHE PATENTSCHRIFT

(11) **EP 0 439 671 B1**
(45) Veröffentlichungstag und Bekanntmachung des Hinweises auf die Patenterteilung: **01.12.1993**
(21) Anmeldenummer: 90114175.4
(22) Anmeldetag: 24.07.1990
(51) Int. Cl.: A22C 11/02, A22C 11/08

(54) **Verfahren und Füllmaschine zum Herstellen von Würsten durch Abteilen eines Wurststranges**
Method and device for stuffing sausages by dividing a string of sausages
Procédé et dispositif pour la fabrication de saucisses en divisant un chapelet de saucisses

(30) Priorität: 31.01.1990 DE 9001076 U
(43) Veröffentlichungstag der Anmeldung: 07.08.1991
(73) Patentinhaber: Albert Handtmann Maschinenfabrik GmbH & Co. KG, D-88400 Biberach (DE)
(72) Erfinder: Reutter, Siegfried, D-7951 Eberhardzell (DE)
(74) Vertreter: Grünecker, Kinkeldey, Stockmair & Schwanhäusser Anwaltssozietät

(56) Entgegenhaltungen:
- EP-A- 0 013 552
- EP-A- 0 019 711
- EP-A- 0 061 995
- EP-A- 0 204 086
- DE-A- 1 632 093
- DE-A- 2 249 070
- DE-A- 3 625 191
- FR-A- 1 377 166

## Beschreibung

Die Erfindung betrifft ein Verfahren und eine Füllmaschine zum Herstellen von Würsten gemäß den Oberbegriffen der Ansprüche 1 und 3,

Üblicherweise werden dabei Würste von gleichem Gewicht, beziehungsweise Volumen hergestellt.

Ein Verfahren zur Herstellung von Würsten gleicher Länge ist aus DE-A-22 49 070 bekannt. Hierbei werden durch eine auf einer austretenden Wurst laufenden Meßrolle Längenimpulse erzeugt und bei Erreichen einer soll-Impulszahl wird die Förderpumpe abgestoppt.

Der Erfindung liegt die Aufgabe zugrunde, ein Verfahren beziehungsweise eine Vorrichtung bekannter Art so auszubilden, daß Würste gleicher Länge hergestellt werden.

Dies wird gefordert, wenn jeweils eine Gruppe von solchen Würsten in einem Behälter, beispielsweise einer Dose, verpackt werden.

Erfindungsgemäß wird diese Aufgabe dürch die kennzeichnenden Merkmale der Ansprüche 1 bzw 3 gelöst.

Soweit es sich um Würste in Naturdärmen handelt, ist es vorteilhaft, wenn der ersten Meßrolle gegenüberliegend eine solche zweite Meßrolle mit Impulsgeber angeordnet ist. Auf diese Art und Weise werden Fehler minimiert, die beim Abtasten von gekrümmten Würsten oder Würsten mit einseitiger Einschnürung sich ergeben würden. Als Längenimpuls wird dann der Mittelwert der gegenüberliegend erzeugten Impulse verwendet.

Weitere vorteilhafte Ausführungsformen der Erfindung ergeben sich aus den Unteransprüchen.

Im nachfolgenden wird ein Ausführungsbeispiel der Füllmaschine anhand der Zeichnungen erläutert.

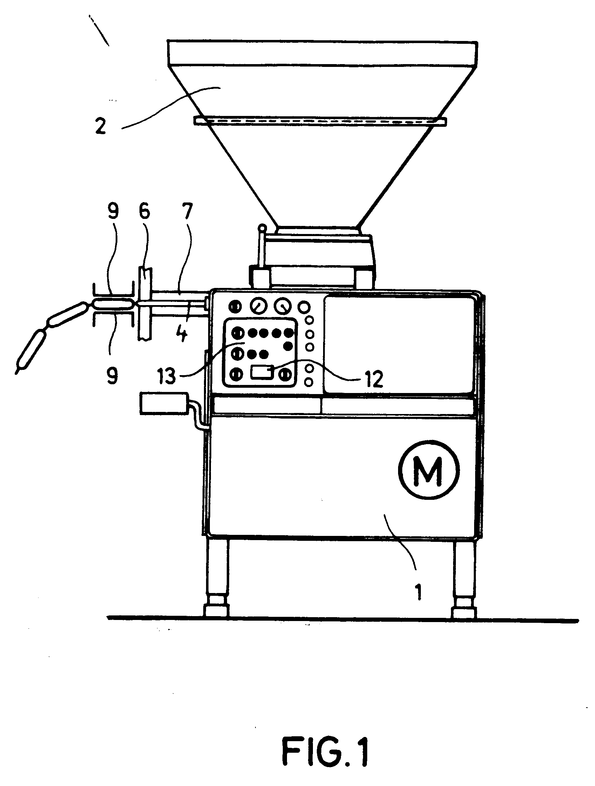

Dabei zeigen
- Fig.1: die schematisch dargestellte Füllmaschine in Seitenansicht und
- Fig.2: eine Einzelheit der Füllmaschine.

Die Füllmaschine weist ein Gehäuse 1 auf, auf deren Oberseite ein Fülltrichter 2 angeordnet ist, in welchen das Wurstbrät eingefüllt wird.

Unterhalb des Fülltrichters 2 ist als Dosiervorrichtung eine Flügelzellenpumpe 3 vorgesehen. Diese Flügelzellenpumpe 3 wird über ein nicht dargestelltes Getriebe durch einen, im unteren Bereich des Gehäuses 1 angeordneten Elektromotor M, angetrieben.

An den Auslauf der Flügelzellenpumpe 3 schließt sich - aus dem Gehäuse 1 herausragend - ein Füllrohr 4 an, auf welchem der Darm in Form einer Raupe 5 angeordnet ist.

Am vorderen Ende des Füllrohres 4 ist eine Abteilvorrichtung 6 mittels eines Halters 7 befestigt.

Der bereits aus dem Füllrohr 4 ausgetretene Wurststrang 8 wird durch zwei gegenüberliegende Führungen 9, z.B. in Form von endlos umlaufenden Förderbänden geführt und an einer Drehung gehindert.

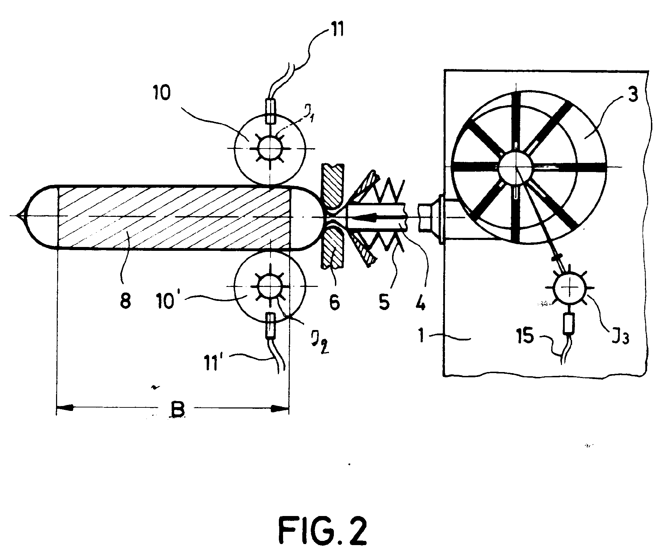

Wie aus Fig. 2 ersichtlich, sind bezüglich des Wurststranges zwei gegenüberliegende Meßrollen 10 angebracht, die mittels Halter am Gehäuse an der Abteilvorrichtung gelagert sein können (nicht gezeichnet).

Die Lagerungen der Meßrollen sind so ausgebildet, daß die Meßrollen 10 in ihrem Abstand zueinander veränderbar eingestellt werden können. Die Einstellung erfolgt dabei so, daß die Meßrollen 10 und 10' auf der Wurst aufliegen um von dieser während ihrer Vorwärtsbewegung in Drehung versetzt werden. (Der besseren Übersicht wegen sind die beiden Meßrollen um 90° gedreht in Fig. 2 dargestellt).

Mit der Meßrolle 10 ist ein Impulsgeber J1 und mit der Meßrolle 10' ein Impulsgeber J2 formschlüssig verbunden, so daß sie die Drehbewegung der zugeordneten Meßrolle mitmachen. Jeder der beiden Impulsgeber J1 und J2 ist über eine elektrische Leitung 11 bzw. 11' mit einer Steuerung 12 verbunden, die Bestandteil einer Schalttafel 13 ist.

Die Steuerung 12 enthält einen Rechner und steuert den Antrieb für die Flügelzellenpumpe 3 und die Abteilvorrichtung 6, sowie gegebenenfalls die als Führungen 9 dienenden endlosen Förderbänder.

Der Rotor 14 der Flügelzellenpumpe 3 ist formschlüssig mit einem Impulsgeber J3 verbunden, der über eine elektrische Leitung 15 ebenfalls mit der Steuerung 12 verbunden ist.

Die Impulsgeber J1 und J2 tasten den Wurststrang 8 über einen Meßbereich B ab, in welchem der Wurststrang im wesentlichen zylindrisch ist.

Die an den zylindrischen Teil anschließenden, annähernd halbkugelförmigen Enden ergeben mit dem zylindrischen Teil zusammen die Portionslänge.

Mit der Füllmaschine wird das nachfolgend beschriebene Verfahren durchgeführt.

Das im Fülltrichter 2 befindliche Wurstbrät wird der Flügelzellenpumpe 3 zugeleitet, durch deren Drehung das Brät zwangsweise in das Füllrohr 4 gepreßt wird. Dabei wirkt die Flügelzellenpumpe als Dosiervorrichtung, wobei pro Winkelgrad Drehung ein bestimmtes Brätvolumen ausgestoßen wird. Das Wurstbrät gelangt nach Austritt aus dem Füllrohrende in den Wurstdarm, der in Form einer Darmraupe 5 auf dem Füllrohr 4 angeordnet ist.

Es sei unterstellt, daß das vorauslaufende Ende des Wurststranges durch einen vorhergehenden Abteilvorgang abgedreht ist.

Sobald nun der zylindrische Teil des Wurststranges 8 in den Bereich der Meßrollen 10 und 10' gelangt, werden diese Meßrollen durch den Wurststrang angetrieben. Dabei machen die Längenimpulsgeber J1 und J2 die Drehung mit.

Gleichzeitig wird auch der Volumenimpulsgeber J3 durch die Flügelzellenpumpe in Drehung versetzt.

Sobald die Meßrollen 10 und 10' am Beginn des Meßbereiches B angelangt sind, werden die Längenimpulsgeber und der Volumenimpulsgeber in der Weise aktiviert, daß ihre Impulse an die Steuerung 12 weitergeleitet werden, wobei jedem Volumenimpuls eine bestimmte Länge des austretenden Wurststranges 8 entspricht.

In der Steuerung 12 werden die im Meßbereich B von den Längenimpulsgebern J1 und J2 erzeugten Längenimpulse mit den gleichzeitig durch den Volumenimpulsgeber J3 erzeugten Volumenimpulsen verglichen.

Durch einen Rechner wird in Abhängigkeit vom Durchmesser des Wurststranges 8 berechnet, welche Längenänderung sich pro Volumenimpuls ergibt.

So werden zunächst die beim Ausstoß des Wurststranges 8 erzeugten Längenimpulse nur über den Meßbereich B ausgewertet, wo Störgrößen, Form der Wurstenden sowie Meßfehler in Form von Schlupf im Start-Stop-Bereich eliminiert werden.

Es muß nun noch zu der Länge des Meßbereiches B die Länge der Wurstenden in Abhängigkeit vom Durchmesser des Wurststranges (Kaliber) errechnet und volumenmäßig hinzugefügt werden.

Dies kann z.B. rein rechnerisch in der Weise erfolgen, daß der Volumenunterschied zwischen einem Zylinder mit dem Kaliberdurchmesser d und der Länge l = d und einer Kugel mit dem Kaliberdurchmesser errechnet und das so berechnete Volumen mit Hilfe des Volumenimpulsgebers J3 noch hinzugefügt und dann der Abdrehvorgang mit Hilfe der Abteilvorrichtung 6 eingeleitet wird.

Es ist jedoch auch möglich, nach dem Vergleich der Längenimpulse mit den Volumenimpulsen auf dem Meßbereich B die Steuerung so vorzunehmen, daß nach dem vorstehend genannten Vergleich das Volumen für eine zylindrische Portion mit der Länge L errechnet wird und zunächst eine oder mehrere Würste mit einer solchen Überlänge hergestellt und dann im Rechner ein Korrekturfaktor eingegeben wird, der z.B. aufgrund von Erfahrungswerten bemessen wird und zur Erzeugung einer Wurst mit dem Längensollwert führt.

Es ist aber auch möglich, durch mehrfache Korrekturen die Länge der Wurst schrittweise zu verkürzen, bis sie schließlich die Soll-Länge aufweist und die dazu notwendige Zahl der Volumenimpulse gespeichert wird, die dann bei der nachfolgenden Herstellung der weiteren Würste zugrundegelegt werden kann. Damit die Wurstlänge möglichst genau erzielt werden kann, muß der Meßbereich B so groß wie möglich sein.

Wenn bei der Längenmessung zwei Meßrollen 10 und 10' gegenüberliegend angeordnet werden, werden Fehler vermieden, die sich aufgrund der Wurstkrümmung ergeben könnten.

## Patentansprüche

1. Verfahren zum Herstellen von Würsten durch Abteilen eines mittels einer Füllmaschine erzeugten, aus einer Abteilvorrichtung austretenden Wurststranges, wobei die Wurst durch eine Meßrolle abgetastet wird und dabei Längenimpulse erzeugt werden, **dadurch gekennzeichnet,** daß nur der mittlere zylindrische Teil (Meßteil) der Wurst abgetastet wird und das gleichzeitig während dieser Längenmessung geförderte Brätvolumen in Volumenimpulse umgesetzt wird, daß die Längenimpulse mit den Volumenimpulsen verglichen werden, wonach die zur Herstellung der Soll-Länge der Wurst erforderlichen Gesamt-Volumen-Impulszahlen, die der Längenmessung entsprechende Volumenimpulse sowie Korrekturfaktoren umfassen, in einer Steuerung errechnet werden und der Ausstoß des Wurstbrätes nach Erreichen der Gesamt-Volumen-Impulszahl gestoppt und der Abteilvorgang eingeleitet wird.

2. Verfahren nach Anspruch 1, **dadurch gekennzeichnet,** daß die Korrekturfaktoren ermittelt werden, indem mit Hilfe der abgetasteten Längenimpulse und der gleichzeitig erzeugten Volumenimpulse die theoretische Länge eines zylindrischen Wurststranges errechnet, dann einige Würste mit dieser Länge hergestellt und die Ist-Länge jeweils gemessen wird; und dann aus Ist- und Soll-Länge der Korrekturfaktor abgeleitet werden kann.

3. Füllmaschine zum Durchführen des Verfahrens nach Anspruch 1 mit einer Dosiervorrichtung (3) und mit einer den Wurststrang (8) abteilenden Abteilvorrichtung (6) zum Herstellen von abgeteilten Würsten, wobei in Ausstoßrichtung des Wurststranges (8) gesehen nach der Abteilvorrichtung (6) eine Meßrolle (10) mit einem Längenimpulsgeber (J1) verbunden ist, **gekennzeichnet** **durch** eine Meßrolle (10) zum Aufliegen und Abrollen auf dem zylindrischen Teil des Wurststranges, und daß ferner die Dosiereinrichtung (3) mit einem Volumenimpulsgeber (J3) versehen ist, und daß eine mit dem Längenimpulsgeber (J1) und dem Volumenimpulsgeber (J3) verbundene, einen Rechner enthaltende Steuerung (18) vorgesehen ist, zum Vergleichen von Längenumpulsen mit Volumenimpulsen, zur Ermittlung der Gesamt-Volumen-Impulszahl aus der Längenmessung entsprechenden Volumenimpulsen und Korrekturfaktoren und zur Steuerung des Abteilvorgangs.

4. Vorrichtung nach Anspruch 3, **dadurch gekennzeichnet,** daß der esten Meßrolle (10) gegenüberliegend eine solche zweite Meßrolle (10') mit dem Impulsgeber angeordnet ist.

## Claims

1. Method for the manufacture of sausages by dividing a sausage string produced by means of a stuffing machine and emerging from a divider, wherein the sausage is scanned by a measuring roller and at the same time length pulses are generated, characterised in that only the central cylindrical part (measuring part) of the sausage is scanned, and the sausage meat volume simultaneously pumped during this length measurement is converted to volume pulses, in that the length pulses are compared with the volume pulses, whereupon the total volume pulse numbers required to manufacture the nominal length of the sausage, which include volume pulses corresponding to the length measurement as well as correction factors, are calculated in a control means, and ejection of the sausage meat is stopped after reaching the total volume pulse number and the dividing operation is commenced.

2. Method according to claim 1, characterised in that the correction factors are determined by calculating the theoretical length of a cylindrical sausage string by means of the scanned length pulses and the simultaneously generated volume pulses, then some sausages of this length are manufactured and the actual length is measured in each case; and then the correction factor can be derived from actual and nominal lengths.

3. Stuffing machine for carrying out the method according to claim 1 with a proportioning device (3) and with a divider (6) dividing the sausage string (8) for the manufacture of divided sausages, wherein, after the divider (6) as seen in the direction of ejection of the sausage string (8), a measuring roller (10) is connected to a length pulse generator (J1), characterised by a measuring roller (10) for resting on and rolling over the cylindrical part of the sausage string, and in that furthermore the proportioning device (3) is provided with a volume pulse generator (J3), and in that a control means (18) connected to the length pulse generator (J1) and the volume pulse generator (J3) and containing a computer is provided, for comparing length pulses with volume pulses, for determining the total volume pulse number from volume pulses corresponding to the length measurement and correction factors, and for controlling the dividing operation.

4. Apparatus according to claim 3, characterised in that opposite the first measuring roller (10) is arranged a second measuring roller (10') of this kind with the pulse generator.

## Revendications

1. Procédé de fabrication de saucisses par division d'un chapelet, produit au moyen d'une remplisseuse et sortant d'un dispositif de division, la saucisse étant balayée par un rouleau de mesure et des impulsions de longueur étant alors générées, caractérisé en ce que seule la section cylindrique centrale (section de mesure) de la saucisse est balayée, et le volume de chair à saucisse, simultanément transporté pendant cette mesure de longueur, est converti en impulsions de volume, en ce que les impulsions de longueur sont comparées aux impulsions de volume, puis les nombres totaux d'impulsions de volume, requis pour la production de la longueur de consigne de la saucisse, et qui englobent des impulsions de volume, correspondantes à la mesure de longueur, ainsi que des facteurs correctifs, sont calculés dans une commande, l'éjection de la chair à saucisse est stoppée après l'obtention du nombre total d'impulsions de volume, et l'opération de division est engagée.

2. Procédé suivant la revendication 1, caractérisé en ce que les facteurs correctifs sont déterminés en calculant, à l'aide des impulsions de longueur analysées et des impulsions de volume simultanément générées, la longueur théorique d'un chapelet de saucisses cylindrique, puis en fabriquant quelques saucisses de cette longueur, et en mesurant la longueur effective respective, le facteur correctif pouvant être ensuite déduit de la longueur effective et de consigne.

3. Remplisseuse pour la réalisation du procédé suivant la revendication 1, avec un dispositif de dosage (3) et un dispositif de division (6), partageant le chapelet de saucisses (8), pour la fabrication de saucisses divisées, un rouleau de mesure (10) étant assemblé avec un générateur d'impulsions de longueur (J1) en aval du dispositif de division (6), vu dans le sens d'éjection du chapelet de saucisses (8), caractérisée par un rouleau de mesure (10), qui s'applique et roule sur la section cylindrique du chapelet de saucisses, en ce que le dispositif de dosage (3) est muni d'un générateur d'impulsions de volume (J3), et en ce qu'une commande (12), comportant un calculateur et reliée au générateur d'impulsions de longueur (J1) et au générateur d'impulsions de volume (J3), est prévue pour comparer les impulsions de longueur aux impulsions de volume, pour déterminer le nombre total d'impulsions de volume à partir des impulsions de volume, correspondantes à la mesure de longueur, et de facteurs correctifs, et pour commander l'opération de division.

4. Dispositif suivant la revendication 3, caractérisé en ce qu'un second rouleau de mesure (10'), avec le générateur d'impulsions, est disposé en vis-à-vis du premier rouleau de mesure (10).
